# EUROPEAN PATENT APPLICATION

(11) **EP 2 737 792 A1**
(43) Date of publication of application: **04.06.2014**
(21) Application number: 12817919.9
(22) Date of filing: 28.06.2012
(51) Int. Cl.: A01J 9/02, A01J 5/00, A01J 11/00, B65D 85/80

(54) **APPARATUS FOR PRODUCING COMMERCIAL-GRADE DRINKING MILK**

(30) Priority: 28.07.2011 RU 2011131514
(71) Applicant: Belonosov, Aleksandr Ivanovich, Moscow 127015 (RU); Kuteinikov, Andrei Anatolievich, Leninsky raion, Moskovskaya oblast 142750 (RU)
(72) Inventor: Belonosov, Aleksandr Ivanovich, Moscow 127015 (RU); Kuteinikov, Andrei Anatolievich, Leninsky raion, Moskovskaya oblast 142750 (RU)
(74) Representative: Cohausz & Florack
(86) International application number: PCT/RU2012/000517
(87) International publication number: WO 2013/015715

(57) **Abstract**

The apparatus for producing commercial drinking milk comprises a milking machine on a common transport platform, said machine having teat cups (1) connected in series with a vacuum pump (4) and a milk line (5); a filter (6); a milk collecting tank (7) provided with a means (8) for cooling milk, a unit (25) of processing and packaging milk; and a control unit (18) for the automatic controlling the treatment process. The unit (25) comprises a dispenser (9); a packet roll (10), a mechanism (11) for feeding the packet; a means (12) for opening the packet neck; a means (13) for fixing the packet; a means for bactericidal treatment; a means (14) for air-tight sealing of the packet, and a mechanism (15) for discharging the packet to the receiving tray (16) for the finished products. The input of the unit (18) is electrically connected to a sensor of filling the dispenser (9), and the outputs are connected to the control inputs of a mechanism (11) for supplying a packet, of means (13, 14) for fixing and making the packet air-tight and of the mechanism (15) for discharging the packet in the receiving tray (16) for the finished products.

## Description

### Field of the Invention

The invention relates to equipment for food processing, and more particularly to an apparatus for producing commercial drinking milk directly at the livestock farms.

### BACKGROUND

Milking machines are widely used at livestock farms for milking cows with accumulation of obtained milk in containers that are part of the milking machines. Milk accumulated at dairy farms in storage tanks of a number of milking machines is poured into milk cooling tanks and then to transport tanks for delivery to the dairy factories. At diary factories the milk obtained from a plurality of cows, often from different farms is fed into equipment providing its normalization, homogenization, pasteurization or sterilization, other processing, and then is passed for prepacking and packaging for producing commercial drinking milk, which obtains altered properties and taste compared to newly drawn or native milk as a result of such treatment.

A line for the production of drinking milk is disclosed in prior art. Said line comprises a collecting tank for original native milk, a heat exchanger with a source of infrared radiation, a bactofuge, an intermediate tank, multistage rotor-pulsation apparatus, a cooler, a collecting tank for the processed milk located on the downstream side of the interconnected system of pipelines, and a unit for filling packets and packaging (RU 2222952 A, published on 10.02.2004).

This product line provides a packaged essentially industrial dairy product that tastes of boiled milk due to its high content of denatured protein as milk obtained from different farms, and of many cows, which is certainly preliminary heated to 60°C and it is subjected to the pasteurization and homogenization in a multistage rotary pulsation apparatus under high shear gradients in the conditions of resonance oscillations of the stator and the rotor leading to destruction of vitamins and denaturation of whey protein and degradation of the biological and nutritional value of milk and its organoleptic properties.

The closest to the claimed technical solution is the system described in US 2010/0068345 published on 18.03.2010. Said system comprises a milking machine with a vacuum pump and sensors for detecting specific cow data, a milk line having a filter, a milk collecting tank, a unit of processing milk obtained from a particular animal, said unit comprising a means for cooling and packaging milk, a means for applying marking on the packet with the data of the particular animal and milk quality and composition, and the unit for automatic control of the milk processing. According to the technology described in said patent, the milk can be subjected to a process selected from the group including cooling, sorting, checking, separating, sterilizing, homogenizing, pasteurizing, mixing, and supplementing with biologically active substances and vitamins. Modes for treating the milk and devices for processing the milk are not disclosed.

Document US 2010/0068345 describes the possibility of obtaining commercial drinking milk from a particular animal with the provision of consumer information about the animal, place of maintenance, its health, and information about the quality of milk produced by the animal. The document does not disclose specific means and devices used to maintain the native qualities of milk placed in the packets. The described system is adapted primarily for use with milking robots and is a fairly large-sized technically complex system.

### SUMMARY OF THE INVENTION

The basic aim to be achieved by the claimed invention is to provide an apparatus for producing commercial drinking milk providing milking, processing, packaging of milk directly at the farm and in keeping pace with milking, and preserving native properties of obtained milk. At the same time the apparatus must be a compact and mobile complex convenient for use at a small livestock farm.

The technical result is achieved due to the fact that in the apparatus for producing commercial drinking milk comprising a milking machine with a vacuum pump, a milk filter, a milk collecting tank, a means for cooling milk, a unit for processing and packaging milk, and a process control unit. According to the invention, the unit for processing and packaging milk comprises a dispenser, a packet roll, a mechanism for supplying a packet having a means for opening the packet neck, and a means for fixing the packet relative to the output nozzle of the dispenser, a means for bactericidal treatment of milk, a means for air-tight sealing of the filled packet, and a receiving tray for finished products. The teat cups of the milking machine are connected to a manifold having an inlet connected through a vacuum line to the vacuum pump, and an output connected through the serial milk line and filter to the milk collecting tank provided with the means for cooling milk and the dispenser at its outlet. The means for fixing the packet relative to the output nozzle of the dispenser arranged near the dispenser output is connected with the packet roll through the mechanism for supplying a packet provided with the means for opening the packet neck, the means for air-tight sealing of the packet after filling it with milk, and the mechanism for discharging the packet into the receiving tray for finished products. The means for bactericidal treatment of milk is configured to treat the area covering the dispenser outlet and the means for fixing the packet. The input of the automatic control unit is electrically connected to the sensor of dispenser filling, and its corresponding outputs are connected to the drives of the mechanism for supplying a packet, the means for fixing and air-tight sealing the packet and the mechanism for discharging the packet into the receiving tray for finished product.

It is desirable to have the milk collecting tank consisting of three chambers for increasing the shelf life of the packaged milk, wherein the first receiving milk chamber is provided with a heater, the second chamber communicating with the first one is provided with a high-frequency electromagnetic generator producing oscillations in the frequency range from 1 MHz to 1 GHz, and the third output chamber is provided with the means for cooling milk.

The claimed apparatus produces native packaged milk during milking and in keeping pace with milking, in particular for about 30 seconds after passing the milk. The produced milk packets are suitable for being stored for not less than 72 hours.

### BRIEF DESCRIPTION OF THE DRAWINGS

Further objects and advantages of the invention will become apparent from the following detailed description of specific embodiments of an apparatus for producing commercial drinking milk and the drawings:
Fig. 1 shows a block diagram of an apparatus for producing commercial drinking milk;
Fig. 2 is a general view of one of the milk collecting tank embodiment;
Fig. 3 is a general view of an apparatus for producing commercial drinking milk.

### BEST EMBODIMENTS OF THE INVENTION

The essence of the invention lies in the integration of a milking machine with a compact complex for processing, dispensing, cooling and packaging milk on a common transport platform for obtaining commercial drinking milk of native quality directly during milking.

Speaking of native milk quality, we mean that the milk has the initial quality of a natural unmodified state.

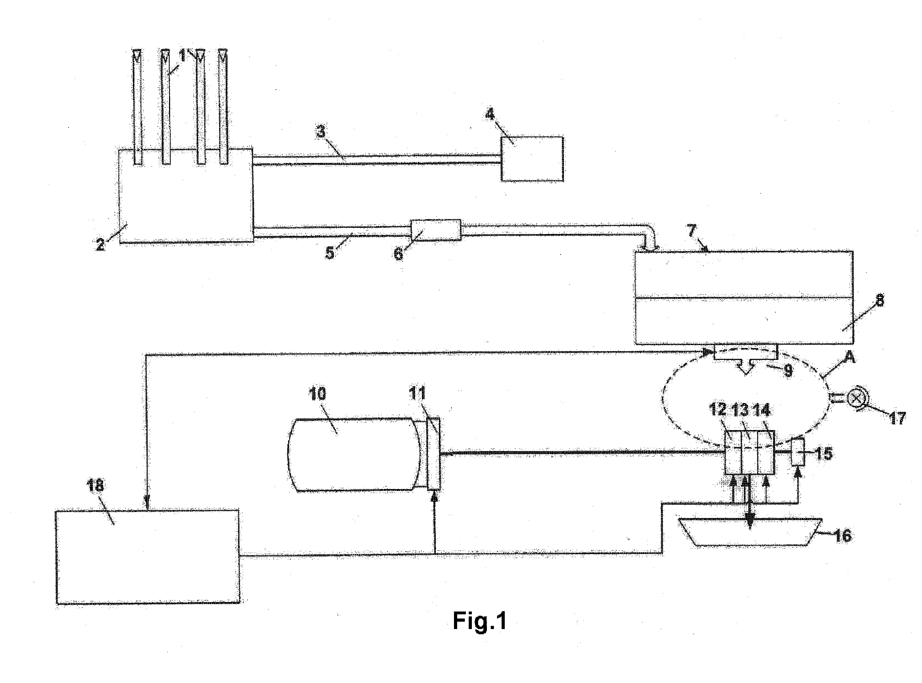

The block diagram of the apparatus for producing commercial drinking milk according to the invention is shown in Fig. 1. The apparatus comprises a milking machine with teat cups 1 connected to the manifold 2. The input of the manifold is connected through a vacuum line 3 to a vacuum pump 4, and and the output of the manifold through serially connected milk line 5 and milk filter 6 to a milk collecting tank 7 provided with a cooling means 8. A dispenser 9 connected to the milk collecting tank 7 is arranged underneath said milk collecting tank 7. The apparatus also comprises a packet roll 10, a mechanism 11 for supplying a packet from the roll 10 to the outlet nozzle of the dispenser 9 comprising a means 12 for opening the packet neck, and a means 13 for fixing the packet to provide proper positioning of the packet relative to the dispenser 9. Furthermore, the apparatus comprises a means 14 for air-tight sealing of the packet after its filling with milk, and a mechanism 15 for discharging the packet into the receiving tray 16 for finished product disposed under the dispenser 9. A means for bactericidal treatment of milk (a bactericidal lamp 17) is located so that it can irradiate zone A including the space where milk flows from the dispenser 9 into the packet. The process for treating milk is carried out in accordance with the commands coming from the automatic control unit 18 electrically connected with its input to the sensor of filling the dispenser 9, and with the corresponding outputs connected with the drives of the mechanism 11 for supplying a packet, the means 12, 13 and 14 for opening the packet neck, for fixing the packet, for air-tight sealing of the neck, and with the drive of the mechanism 15 for discharging the filled packet into the tray 16.

Practically any of the known milking machine of various types can be used in the invention, including milking robots; the cooling means 8 can be a heat exchanger cooled by a thermoelectric or compressor freezer to a temperature T2, which is capable of cooling milk flowing through it at a rate of milking to a temperature of 2-12°C. The mechanism 11 for supplying a packet can be, for example two rollers mounted rotatably around the axis. wherein the gap between the surfaces of the rollers is selected such that the packet tape with partially air-tightly sealed packets from the packet roll 10 can be clamped and extended, the means 12 for opening the packet neck can be a steel cutting plate cutting off the upper edge of the packet during the movement of the packet tape, and for example, a pair of elastic beaks connected to a vacuum device and mounted opposite one another with the possibility of simultaneous closing and opening, wherein each of the beaks providing tight connection with respective outer surface of the packet neck when closed and opening the neck of the packet with previously cut upper edge when the beaks move apart. The means 13 for fixing the packet can be in the form of two rods with rubber-coated end faces arranged opposite one another and configured with the possibility of reciprocating movement. Said rods provide for a secure fixation of the packet neck relative to the output nozzle of the dispenser 9. The means for bactericidal treatment of milk can comprise, for example at least one bactericidal lamp 17 of 4 W disposed at a distance of not more than 30 cm from the outlet nozzle of the dispenser 9. The means 14 for air-tight sealing of a filled packet can comprise for example a pair of flat elements arranged one opposite the other and configured to approach or detach simultaneously. Each element has a wire-heating element on the surface facing the other element. The wire heating elements are heated upon application of voltage to the melting temperature of the material, from which the packet is made.

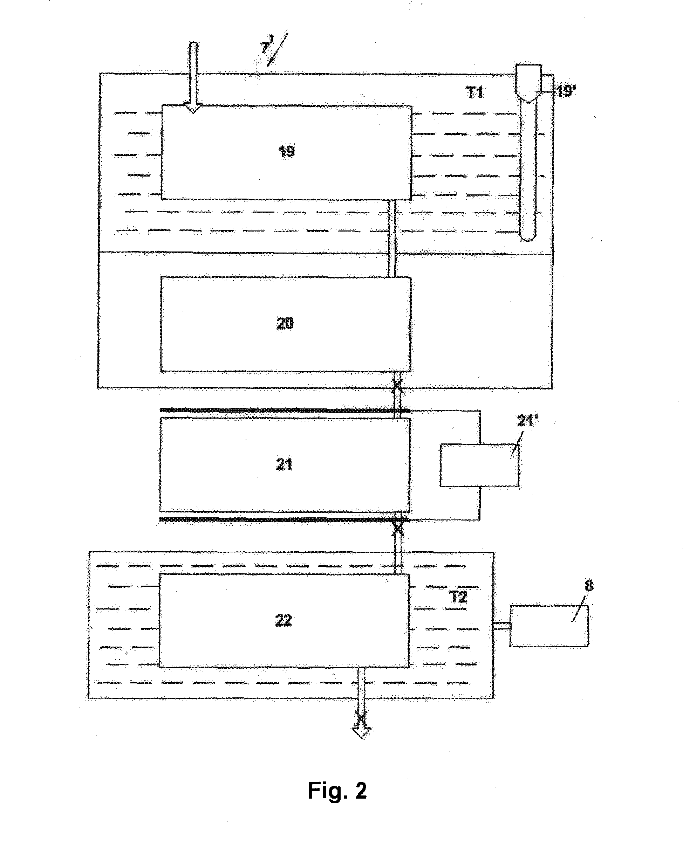

Figure 2 illustrates an embodiment of the milk collecting tank 7', which allows a more intensive (active) processing of milk, when it is necessary to increase its shelf life or there is no clear enough bacterial history of the animal. In this case the milk collecting tank 7 is formed of three chambers, wherein the first chamber 19 is provided with a heater 19' and a storage buffer tank 20, the second chamber 21 is used for high-frequency treatment of milk, and it is provided with a means for generating a high-frequency electromagnetic field, in this case a generator 21' of electromagnetic oscillations of a frequency in the range from 1 MHz to 1 GHz. The third chamber 22 comprises the cooling means 8. The chambers 19, 21, and 22 are interconnected by means of fittings and valves. The milk heater 19' mounted in chamber 19 of the milk collecting tank 7 can be for example a heat exchanger with propylene glycol as a heat-transfer agent heated to temperature T1 of 60 - 70°C. The generator 21' of the high-frequency electromagnetic radiation comprises two plate electrodes mounted on opposite walls of the chamber 21 of the milk collecting tank 7'.

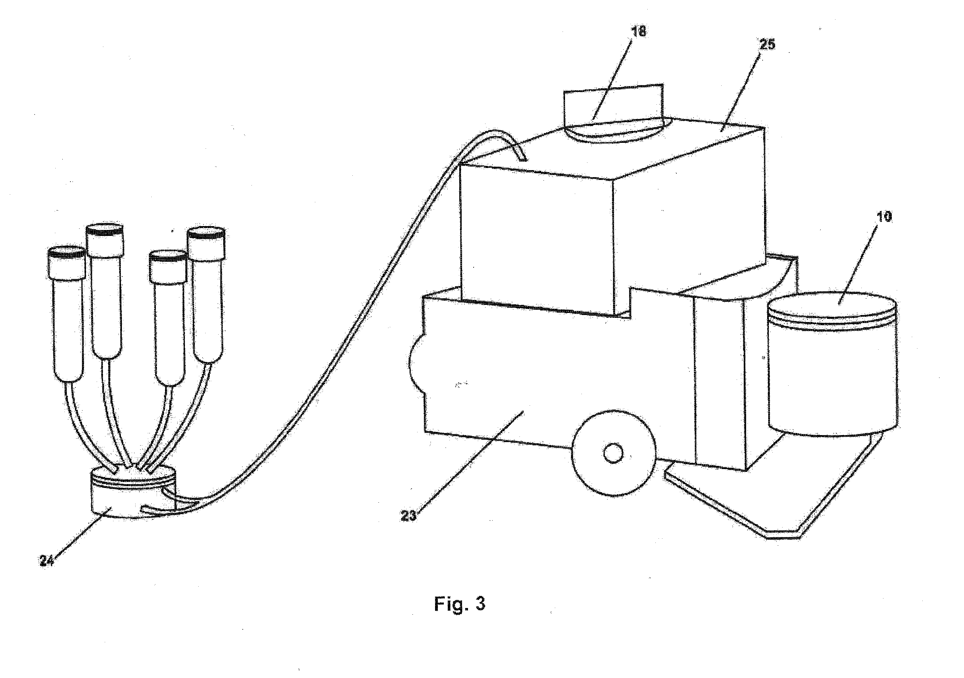

Figure 3 shows a general view of the apparatus for producing commercial drinking milk according to the invention. The apparatus is a compact mobile unit, wherein the unit 25 of processing and packaging milk connected to the milking machine 24, the automatic control unit 18, and the removable packet roll 10 are mounted on a single mobile platform 23.

The claimed apparatus for producing commercial drinking milk operates as follows.

Obtained cow milk flows at the milking rate through the milk line 5 and the milk filter 6 in the milk collecting tank 7 with the cooling means 8, where it is cooled to a temperature of 2-12°C. The milk cooled to said temperature enters the dispenser 9. When the dispenser 9 is filled to a predetermined level, a signal from the sensor of filling the dispenser 9 is received by the input of the automatic control unit 18, which activates the mechanism 11 for supplying a packet, whereby the packet from the tape roll 10 starts to move towards the outlet nozzle of the dispenser 9. The cutting steel plate placed on the way of movement of the packet tape cuts the packet at its upper edge. When the packet reaches the filling position under the nozzle of the dispenser 9, an optical sensor (not shown in the drawings) sends a signal to the automatic control unit 18, which disables the drive of the mechanism 11 for supplying a packet and activates the means 12 for opening the packet neck to start opening the packet neck and the drive of the means 13 for fixing the packet. Under created vacuum, the beaks of the means 12 stick to the outer surfaces of the packet and open it. The packet neck is open in the zone A of action of the bactericidal lamp 17. The packet occupies a position under the outlet of the dispenser 9, wherein the rubber-coated ends of the rods of the means 13 by their movement towards each other provide reliable holding of the packet and its fixation relative to the output of the nozzle of the dispenser 9.

After that, the milk is filled into the packet. Then the packet neck remaining in the zone A of bactericidal action of the bactericidal lamp 17 is sealed by the wire heating elements of the means 14 for air-tight sealing, and the mechanism 15 for discharging the packet according to a command from the control unit 18 discharges the filled packet in the receiving tray 16 accumulating finished products.

The apparatus according to the invention enables packetizing native milk during milking and at the rate of milking of a particular animal, and more specifically enables obtaining a packet of milk suitable for storage for at least 72 hours within about 30 seconds after milking.

In the case of not quite clear bacterial history of the animal, the variant of the apparatus with the milk collecting tank 7' shown in Figure 2 can be used. In this case, the apparatus for producing commercial drinking milk operates as follows.

The milk coming at the rate of milking passes through the milk line 5 and the filter 6 to the milk collecting tank 7', wherein it first enters the heating chamber 19 where it is heated to 45°C and freely flows through the storage buffer tank 20 into the chamber 21 of the high-frequency treatment. After complete filling of the chamber 21 with milk, whose volume in this embodiment serves as a dose, the milk level sensor is triggered, the milk flowing into the chamber 21 is stopped, while the milk from the chamber 19 heated therein to 45°C begins filling the storage buffer tank 20.

In the second chamber 21 of the milk collecting tank 7' by a signal from automatic process control unit 18, the generator 21' of electromagnetic oscillations creates high-frequency electromagnetic field between the two electrodes arranged on the opposite walls of the chamber 21. The high-frequency electromagnetic waves in the range from 1 MHz to 1 GHz affecting the milk in the chamber 21 bring within a few seconds the structural changes at the molecular level of the pathogen microorganisms present in the milk, and the accompanying impact of electromagnetic waves heating the milk to a temperature of 50°C provides complete destruction of the microorganisms at said frequencies.

Thus, the electromagnetic field effectively kills bacteria in the milk and simultaneously heats it to a temperature not exceeding 50°C, resulting in decreasing pathogenic and enzyme activity of microorganisms present in the milk, while retaining the active components of the product determining organic and organoleptic properties, i.e. there occurs an effective pasteurization of milk without changing its properties.

When the treated product is exposed to electromagnetic oscillations of a frequency below 1 MHz, there is no complete destruction of pathogenic bacteria in the milk, while electromagnetic oscillations with a frequency of more than 1 GHz require the use of more sophisticated means of operator protection including shielding to ensure their safety.

When the milk temperature in the chamber 21 reaches 50°C, a temperature sensor is triggered, and by a signal of automatic control unit 18 the generator 21 of electromagnetic oscillations is switched off, the outlet valve of the chamber 21 of the milk collecting tank 7 opens, and the milk is poured into the third chamber 22 provided with the cooling means 8, wherein it cools down to a temperature of 2-12°C. Then the outlet valve of the storage buffer tank 20 opens, and the next portion of milk having a temperature of 45°C flows into the chamber 21 to its full completion for the high-frequency treatment.

Along with the milk processing operations, the process of supplying a packet to the place of filling is carried out. The automatic process control unit 18 activates the mechanism 11 for supplying a packet, which moves a packet to the place of pouring milk controlled by the optical sensor, wherein the steel cutting plate cuts off the top edge of the packet. The means 12 for opening the packet neck opens the neck by moving apart the neck walls in the zone of action of the bactericidal lamp 17. The processed milk from the outlet nozzle of the third chamber of the milk collecting tank 7 is poured in the packet fixed relative to said nozzle. After filling, the packet neck is sealed in the zone of action of the bactericidal lamp 17 as described above, and the packet after passing through a weighing device and a marker (not shown in Figures) is discharged into the receiving tray 16 as the storage of the finished products. If the weight of the packet is different from the nominal weight, the marking in addition to the date of milking and packaging and shelf life includes a new bar-code that indicates the actual weight of the packet to be taken into account when paying at the shop cash desk. It solves the problem of incomplete filling of the last packet of the milk obtained from a particular cow and of accuracy control of volumetric filling of the packets with the milk.

It is preferable to use in the claimed apparatus the packets of Ecolean type made of a composite film material.

All operations of the claimed apparatus are automatic without operator intervention and with practically complete sealing that eliminates any contact with the milk environment. The only open operation is pouring milk in a packet, which lasts a few seconds, but it takes place in the atmosphere of the bactericidal treatment disinfecting all the space in the zone A around the packet neck.

Hence, the claimed apparatus completely eliminates the ingress of bacteria in milk from outside.

The volume of additionally included in the apparatus devices and units is comparable with the volume of the currently used milk collecting tank in known milking machines, i.e. the overall size and weight of the claimed apparatus differs slightly from a traditional milking apparatus. All units that are part of the apparatus are structurally quite simple, and they do not require complex unique equipment for their manufacturing. The apparatus according to the invention can be advantageously made at any enterprise for the production of equipment for agriculture.

## Claims

1. An apparatus for producing commercial drinking milk comprising a milking machine with teat cups (1), a vacuum pump (4), a milk line (5), a filter (6), a milk collecting tank (7), a milk cooling means (8), a unit (25) of processing and packaging milk, and an automatic process control unit (18);
**characterized in that** the unit (25) of processing and packaging milk comprises a dispenser (9), a packet roll (10), a mechanism (11) for supplying a packet, a means (12) for opening the packet neck, a means (13) for fixing the packet, a means for bactericidal treatment, a means (14) for air-tight sealing of the filled packet, and a mechanism (15) for discharging the packet in a receiving tray (16) for finished products;
wherein the teat cups (1) of the milking machine are connected to a manifold (2) having the input connected to the vacuum pump (4) through a vacuum hose, and the outlet connected the milk collecting tank (7) with the milk cooling means (8) through the serially connected milk line (5) and the filter (6); the dispenser (9) is arranged at the output of the milk collecting tank (7), and near the output of the dispenser (9) there is the means (13) for fixing the packet relative to said output, said means being connected with the packet roll (10) by the mechanism (11) for supplying a packet provided with the means (12) for opening the packet neck, the means (14) for air-tight sealing the packet after its filling, and the mechanism (15) for discharging the packet in the receiving tray (16) for finished products;
the means for bactericidal treatment is arranged so that it can irradiate zone (A) including the space between the output of the dispenser (9) and the means (13) for fixing the packet; the input of the automatic control unit (18) is electrically connected to the sensor of dispenser (9) filling, and the outputs of the of the automatic control unit (18) are connected to the control inputs of the mechanism (11) for supplying a packet, the means (13, 14) for fixing the packet and air-tight sealing, and the mechanism (15) for discharging the packet in the receiving tray (16) for finished products.

2. The apparatus according to claim 1, **characterized in that** the milk collecting tank (7) comprises three chambers, wherein the first receiving milk flow chamber (19) is provided with a heater (19'), the second chamber (21) is provided with a high-frequency generator (21') of electromagnetic radiation in the range from 1 MHz to 1 GHz, and the third chamber (22) comprises the means (8) for cooling.
